(19) Europäisches Patentamt
European Patent Office
Office européen des brevets

(11) **EP 3 663 987 B1**

(12) **FASCICULE DE BREVET EUROPEEN**

(45) Date de publication et mention de la délivrance du brevet:
**28.06.2023 Bulletin 2023/26**

(21) Numéro de dépôt: **19211035.1**

(22) Date de dépôt: **22.11.2019**

(51) Classification Internationale des Brevets (IPC):
**G06N 3/04** *(2023.01)* **G06N 3/063** *(2023.01)*
**G06F 12/02** *(2006.01)* **G06N 3/045** *(2023.01)*

(52) Classification Coopérative des Brevets (CPC):
**G06N 3/063; G06F 12/0207; G06F 12/0284;
G06N 3/045;** G06F 2212/1044

(54) **PROCÉDÉ ET DISPOSITIF DE DÉTERMINATION DE LA TAILLE MÉMOIRE GLOBALE D'UNE ZONE MÉMOIRE GLOBALE ALLOUÉE AUX DONNÉES D'UN RÉSEAU DE NEURONES**

VERFAHREN UND VORRICHTUNG ZUR BESTIMMUNG DER GLOBALEN SPEICHERGRÖSSE EINER GLOBALEN SPEICHERZONE, DIE DEN DATEN EINES NEURONALEN NETZES ZUGEORDNET IST

METHOD AND DEVICE FOR DETERMINING THE OVERALL MEMORY SIZE OF AN OVERALL MEMORY AREA ALLOCATED TO DATA FROM A NEURAL NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2018 FR 1872443**

(43) Date de publication de la demande:
**10.06.2020 Bulletin 2020/24**

(73) Titulaire: **STMicroelectronics (Rousset) SAS
13790 Rousset (FR)**

(72) Inventeurs:
• **FOLLIOT, Laurent
06620 Gourdon (FR)**
• **DEMAJ, Pierre
06200 Nice (FR)**

(74) Mandataire: **Casalonga
Casalonga & Partners
Bayerstraße 71/73
80335 München (DE)**

(56) Documents cités:
**EP-B1- 3 408 798      US-A1- 2018 136 912
US-A1- 2018 285 715**

• **ERDELJAN ANDREA ET AL: "IP core for efficient zero-run length compression of CNN feature maps", 2017 25TH TELECOMMUNICATION FORUM (TELFOR), IEEE, 21 novembre 2017 (2017-11-21), pages 1-4, XP033293503, DOI: 10.1109/TELFOR.2017.8249397**

## Description

Des modes de mise en oeuvre et de réalisation de l'invention concernent l'apprentissage approfondi (en anglais « deep learning »), notamment les réseaux de neurones profonds, et plus particulièrement la détermination de la taille mémoire globale d'une zone mémoire globale à allouer dans une mémoire destinée à stocker des données d'entrée et des données de sortie de chaque couche d'un réseau de neurones.

Il est connu du document US 2018/136912 une technique d'allocation mémoire pour des données d'entrée et de sortie de chaque couche d'un réseau de neurones.

Les réseaux de neurones sont massivement utilisés pour résoudre divers problèmes statistiques notamment le problème de la classification de données.

Après une phase d'apprentissage automatique généralement supervisée, c'est-à-dire sur une base de données de référence déjà classifiées, un réseau de neurones « apprend » et devient tout seul capable d'appliquer la même classification à des données inconnues.

On peut citer par exemple les réseaux de neurones à convolution, ou CNN (« Convolutional Neural Networks » en anglais) qui sont un type de réseau de neurones dans lequel le motif de connexion entre les neurones est inspiré par le cortex visuel des animaux. Ils permettent avec efficacité la reconnaissance d'objets ou de personnes dans des images ou des vidéos.

Un réseau de neurones convolutif contient généralement quatre types de couches traitant successivement l'information :

- la couche de convolution qui traite par exemple des blocs de l'image les uns après les autres ;
- la couche non-linéaire qui permet d'améliorer la pertinence du résultat ;
- la couche de mise en commun (appelée « pooling ») qui permet de regrouper plusieurs neurones en un seul neurone ;
- la couche entièrement connectée (appelée « fully-connected » ou couche dense) qui relie tous les neurones d'une couche à tous les neurones de la couche précédente.

Chaque couche prend en entrée des données et délivre en sortie après traitement par ladite couche, des données de sortie (« features » en anglais).

La couche de convolution correspond généralement à un produit scalaire entre les neurones de la couche précédente et les poids du réseau de neurones. Elle constitue la première couche d'un réseau de neurones convolutif.

Par « poids », qui est un terme dont la signification dans le domaine des réseaux de neurones est bien connue de l'homme du métier, on entend des paramètres de neurones configurables pour obtenir de bonnes données de sortie.

Le but de la couche de convolution est de repérer la présence d'un ensemble de données spécifiques dans les images reçues en entrée. Pour cela, on réalise un filtrage par convolution. Le principe est de faire glisser une fenêtre représentant les données à détecter, et de calculer le produit de convolution entre la fenêtre et chaque portion de l'image balayée.

On obtient pour chaque produit de convolution, des données de sortie indiquant où se situent les données spécifiques sur l'image.

La couche de mise en commun est souvent placée entre deux couches de convolution. Elle reçoit en entrée les données de sortie de la couche de convolution à qui on applique une opération de « pooling » qui consiste à réduire la taille des données tout en préservant leurs caractéristiques importantes. Elle permet de réduire le nombre de paramètres et de calculs dans le réseau. On améliore par conséquent l'efficacité dudit réseau.

La couche entièrement connectée constitue la dernière couche d'un réseau de neurones convolutif ou non convolutif. Elle permet de classifier les données d'entrée du réseau de neurones.

Les architectures typiques de réseaux de neurones empilent quelques paires de couches de convolution et couches non-linéaires puis ajoutent une couche de pooling et répètent ce schéma jusqu'à obtenir des données de sortie de taille suffisamment petite, puis terminent par deux couches entièrement connectées.

Aujourd'hui, les réseaux de neurones sont de plus en plus complexes et requièrent un espace important en mémoire.

Plusieurs types de mémoire vive sont compatibles avec l'utilisation d'un réseau de neurones par exemple une mémoire TCM (« Tightly-Coupled Memory » en anglais) ou une mémoire vive statique (SRAM pour l'anglais « Static Random Access Memory ») ou une mémoire externe.

Si le réseau de neurones a besoin d'une grande mémoire, le système dans lequel le réseau de neurones est implémenté pourrait combiner plusieurs types de mémoire, par exemple la mémoire TCM avec la mémoire externe, ralentissant le temps d'exécution du réseau.

Il existe donc un besoin de limiter autant que possible, voire d'optimiser, la taille mémoire nécessaire à l'exécution du réseau de neurones. L'optimisation de la taille mémoire conduit également à une optimisation de la surface du système et à une réduction de sa consommation d'énergie lors de l'exécution du réseau de neurones.

**EP 3 663 987 B1**

Selon un aspect, il est proposé un procédé de détermination de la taille mémoire globale d'une zone mémoire globale à allouer dans une mémoire destinée à stocker des données d'entrée et des données de sortie de chaque couche d'un réseau de neurones, le procédé comprenant pour chaque couche une détermination d'une taille mémoire élémentaire d'une zone mémoire élémentaire destinée à stocker des données d'entrée et des donnés de sortie de ladite couche, ladite taille élémentaire étant comprise entre la taille mémoire des données d'entrée ou de sortie de ladite couche et une taille égale à la somme de la taille mémoire des données d'entrée et de la taille mémoire des données de sortie de ladite couche, la taille mémoire globale étant déterminée à partir des tailles mémoires élémentaires associées auxdites couches, la zone mémoire globale contenant toutes les zones mémoire élémentaires.

Lesdites données d'entrée et de sortie sont stockées, pour chaque couche, dans une zone mémoire élémentaire dont la taille est déterminée. Ladite zone mémoire élémentaire est avantageusement dans la mémoire RAM.

L'ensemble des mémoires élémentaires représente une zone mémoire globale à allouer avantageusement dans la mémoire RAM.

L'optimisation de la taille de chaque zone mémoire élémentaire conduit à l'optimisation de la taille de la zone mémoire globale.

Selon un mode de mise en oeuvre, pour chaque couche, la détermination de ladite taille mémoire élémentaire et le placement des données d'entrée et des données de sortie dépendent au moins du type de la couche.

La détermination de ladite taille mémoire élémentaire et le placement des données d'entrée et des données de sortie peuvent dépendre également de la taille mémoire des données de sortie de la couche, et de leur emplacement dans la zone mémoire élémentaire.

En d'autres termes, en fonction du type de la couche par exemple une couche de convolution, dense, non-linéaire ou une couche de mise en commun, de l'emplacement des données de sortie de sortie et de la taille mémoire de ces dites données, le placement qui requiert le moins de mémoire est choisi.

La zone mémoire élémentaire peut comporter avantageusement, en fonction par exemple du type de la couche ou des opérations existantes entre deux couches, une zone mémoire additionnelle permettant d'éviter un écrasement des données utiles dans la zone mémoire élémentaire. Dans ce cas, la taille de la zone mémoire élémentaire est bien inférieure ou égale à la somme de la taille des données d'entrée et des données de sortie de la couche du fait que les données de sortie se superposent aux données d'entrée de cette couche.

Selon un mode de mise en oeuvre selon l'invention revendiquée, pour au moins un type de couche, une partie au moins des données de sortie sont stockées dans la zone mémoire élémentaire à la place d'une partie au moins des données d'entrée, ladite taille mémoire élémentaire étant inférieure à la taille égale à la somme de la taille mémoire des données d'entrée et de la taille mémoire des données de sortie de ladite couche. En particulier, dans ce mode de mise en oeuvre les données d'entrée de ladite couche ne sont pas réutilisées par les couches suivantes du réseau de neurones. Elles peuvent ainsi être écrasées par les données de sortie de la couche.

Selon un mode de mise en oeuvre, selon l'invention revendiquée, pour au moins un autre type de couche, ladite taille mémoire élémentaire est égale à la taille de la somme de la taille mémoire des données d'entrée et de la taille mémoire des données de sortie de ladite couche, les données de sortie et les données d'entrée étant juxtaposées dans la zone mémoire correspondante.

Selon un mode de mise en oeuvre, la détermination de la taille mémoire globale comprend des mises à jour successives d'une valeur courante de la taille mémoire à partir des tailles mémoire élémentaires successivement déterminées pour les couches successives du réseau de neurones, la valeur de la taille mémoire globale étant la dernière valeur courante mise à jour à l'issue de toutes les mises à jour successives.

Autrement dit, à chaque couche, après détermination de la taille de la zone mémoire élémentaire, on effectue une mise à jour d'une valeur courante représentant la taille de ladite mémoire élémentaire. Une fois la taille de toutes les zones mémoires élémentaires déterminées, la taille mémoire globale prendra comme valeur ladite valeur courante.

Selon un mode de mise en oeuvre, la première valeur de la taille mémoire est la taille mémoire élémentaire de la zone mémoire élémentaire associée à la première couche, et pour chaque couche courante, la valeur courante de taille mémoire mise à jour est la taille mémoire élémentaire de la zone mémoire élémentaire associée à ladite couche courante si cette taille mémoire élémentaire est supérieure à la valeur précédente de la taille mémoire, ou reste ladite valeur précédente de la taille mémoire si cette taille mémoire élémentaire est inférieure ou égale à cette valeur précédente de la taille mémoire.

Selon un mode de mise en oeuvre, le procédé comprend en outre pour chaque couche, une mise à jour de l'adresse relative de la zone mémoire élémentaire associée à ladite couche.

Chaque zone mémoire élémentaire est stockée avantageusement dans la mémoire RAM qui comprend des adresses.

On entend par « adresse relative », le décalage en mémoire par rapport à la prochaine zone mémoire élémentaire à stocker.

Selon un mode de mise en oeuvre, le procédé comprend pour chaque couche, une détermination de l'adresse absolue de ladite zone mémoire élémentaire associée à ladite couche.

3

Par « adresse absolue », on entend l'adresse de l'emplacement de la zone mémoire élémentaire dans la mémoire destinée à stocker les données d'entrée et de sortie du réseau de neurones.

Ainsi, le procédé selon cet aspect permet par exemple pour un réseau de neurones donné, d'optimiser la taille mémoire à allouer, et d'obtenir pour cette mémoire les adresses absolues et relatives de chaque zone de mémoire élémentaire allouée à chacune des couches du réseau de neurones.

Selon un autre aspect, il est proposé un dispositif comprenant une entrée destinée à recevoir des paramètres définissant les différentes couches successives d'un réseau de neurones, et des moyens de traitement, couplés à ladite entrée, destinés à déterminer la taille mémoire globale d'une zone mémoire globale à allouer dans une mémoire destinée à stocker des données d'entrée et des données de sortie de chaque couche du réseau de neurones, les moyens de traitement étant configurés pour déterminer, pour chaque couche, une taille mémoire élémentaire d'une zone mémoire élémentaire destinée à stocker des données d'entrée et des données de sortie de ladite couche, ladite taille élémentaire étant comprise entre la taille mémoire des données d'entrée ou de sortie de ladite couche et une taille égale à la somme de la taille mémoire des données d'entrée et de la taille mémoire des données de sortie de ladite couche, la taille mémoire globale étant déterminée à partir des tailles mémoires élémentaires associées auxdites couches, la zone mémoire globale étant configurée pour contenir toutes les zones mémoire élémentaires.

Selon un mode de réalisation, pour chaque couche, les moyens de traitement sont configurés pour déterminer ladite taille mémoire élémentaire et le placement des données d'entrée et des données de sortie en fonction au moins du type de la couche.

Les moyens de traitement peuvent être également configurés pour déterminer ladite taille mémoire élémentaire et le placement des données d'entrée et des données de sortie en fonction de la taille mémoire des données de sortie de la couche, et de leur emplacement dans la zone mémoire élémentaire.

Selon un mode de réalisation, pour au moins un type de couche, une partie au moins des données de sortie sont destinées à être stockées dans la zone mémoire élémentaire à la place d'une partie au moins des données d'entrée, ladite taille mémoire élémentaire étant inférieure à la taille égale à la somme de la taille mémoire des données d'entrée et de la taille mémoire des données de sortie de ladite couche.

Selon un mode de réalisation, pour au moins un autre type de couche, ladite taille mémoire élémentaire est égale à la taille de la somme de la taille mémoire des données d'entrée et de la taille mémoire des données de sortie de ladite couche, les données de sortie et les données d'entrée étant destinées à être juxtaposées dans la zone mémoire élémentaire correspondante.

Selon un mode de réalisation, les moyens de traitement sont configurés pour déterminer ladite taille mémoire globale par des mises à jour successives d'une valeur courante de taille mémoire à partir des tailles mémoire élémentaires successivement déterminées par les couches successives du réseau de neurones, la valeur de la taille mémoire globale étant la dernière valeur courante mise à jour à l'issue de toutes les mises à jour successives.

Selon un mode de réalisation, la première valeur de taille mémoire est la taille mémoire élémentaire de la zone mémoire élémentaire associée à la première couche, et pour chaque couche courante, les moyens de traitement sont configurés pour mettre à jour la valeur courante de taille mémoire avec la taille mémoire élémentaire de la zone mémoire élémentaire associée à ladite couche courante si cette taille mémoire élémentaire est supérieure à la valeur précédente de la taille mémoire, ou avec ladite valeur précédente de la taille mémoire si cette taille mémoire élémentaire est inférieure ou égale à cette valeur précédente de la taille mémoire.

Selon un mode de réalisation, les moyens de traitement sont configurés pour effectuer en outre pour chaque couche, une mise à jour de l'adresse relative de la zone mémoire élémentaire associée à ladite couche.

Selon un mode de réalisation, les moyens de traitement sont configurés pour effectuer en outre pour chaque couche, une détermination de l'adresse absolue de ladite zone mémoire élémentaire associée à ladite couche.

Selon un autre aspect, il est également proposé un microcontrôleur comportant ledit dispositif tel que défini ci-avant.

D'autres avantages et caractéristiques de l'invention apparaîtront à la lecture de la description détaillée de modes de mise en oeuvre et de réalisation, nullement limitatifs, et des dessins annexés sur lesquels :

[Fig.1] illustre schématiquement un mode de réalisation de l'invention,
[Fig.2] illustre schématiquement un mode de mise en oeuvre de l'invention,
[Fig.3] illustre schématiquement un mode de mise en oeuvre de l'invention,
[Fig.4] illustre schématiquement un mode de mise en oeuvre de l'invention,
[Fig.5] illustre schématiquement un mode de mise en oeuvre de l'invention,
[Fig.6A] illustre schématiquement un mode de mise en oeuvre de l'invention, et
[Fig.6B] illustre schématiquement un mode de mise en oeuvre de l'invention.

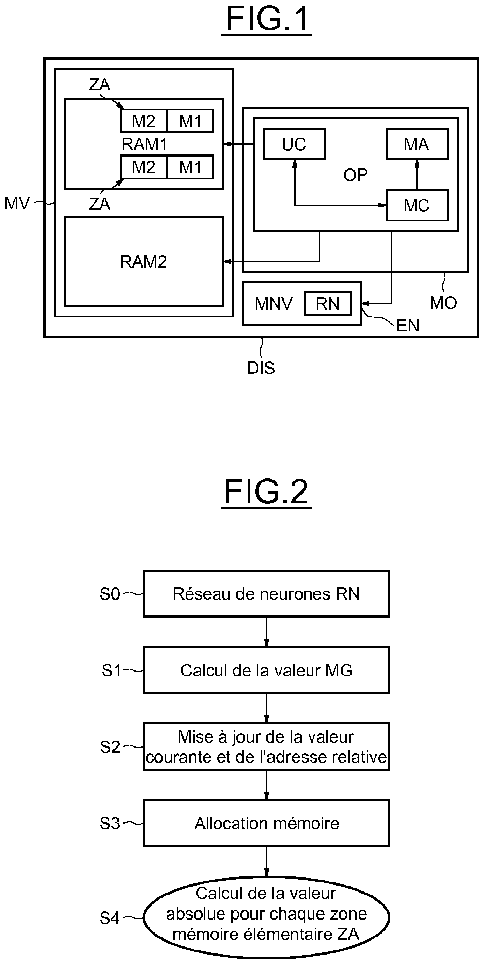

Sur la figure 1, la référence DIS désigne un dispositif par exemple un microcontrôleur, un générateur de code ou tout autre objet pouvant contenir une architecture logicielle embarquée ou matérielle.

Ledit dispositif comprend une mémoire volatile MV par exemple une mémoire RAM (pour « Random Access Memory » en anglais). Ici, la mémoire volatile MV comprend une première mémoire RAM1 et une deuxième mémoire RAM2.

Bien entendu, ladite mémoire volatile peut comprendre plus de deux mémoires.

Le dispositif DIS comprend également une mémoire non-volatile MNV comprenant une entrée EN destinée à recevoir les différents paramètres définissant l'architecture d'un réseau de neurones RN, c'est-à-dire la configuration de ses couches et ses poids.

La mémoire volatile MV est configurée pour stocker dans une des deux mémoires RAM1 et RAM2, les données d'entrée M1 et les données de sortie M2 de chaque couche, les données d'entrée et de sortie de la couche considérée étant destinées à occuper une zone mémoire élémentaire ZA.

Le dispositif DIS comprend un module MO configuré pour réaliser des actions déterminées.

Le module MO comprend des moyens de traitement OP configurés pour déterminer la taille d'une zone mémoire globale à allouer comprenant l'ensemble des zones mémoires élémentaires ZA dans la mémoire volatile MV. Pour cela, les moyens de traitement OP sont couplés aux deux mémoires RAM1 et RAM2, et sont configurés pour déterminer, pour chaque couche du réseau de neurones la taille mémoire élémentaire de la zone mémoire élémentaire ZA associée à ladite couche.

Les moyens de traitement OP comprennent une unité de calcul UC, des moyens de commande MC et des moyens d'allocation MA.

Les moyens de traitement OP sont couplés à la mémoire non-volatile MNV par l'entrée EN pour permettre à l'unité de calcul UC de récupérer les paramètres relatifs aux couches et aux opérations du réseau de neurones.

Ladite unité de calcul UC comprend par exemple un microprocesseur configuré pour réaliser les calculs nécessaires à la détermination de la taille mémoire élémentaire de la zone mémoire élémentaire ZA.

L'unité de calcul UC est configurée pour envoyer les résultats desdits calculs aux moyens de commande MC configurés pour choisir, en fonction du type de la couche et/ou la taille mémoire des données de sortie M2 et/ou de leur emplacement dans la zone mémoire élémentaire ZA, le placement des données des données d'entrée M1 et des données de sortie M2, la taille mémoire élémentaire de la zone mémoire élémentaire ZA et la taille de la zone mémoire globale à allouer comprenant l'ensemble des zones mémoires élémentaires ZA.

Lesdits moyens de commande MC sont couplés aux moyens d'allocation MA configurés pour allouer ladite zone mémoire globale comprenant l'ensemble des zones mémoires élémentaires ZA après autorisation des moyens de commande MC.

Les moyens de commande et d'allocation peuvent être par exemple réalisés par des modules logiciels au sein du microprocesseur et/ou par des circuits logiques spécifiques.

La figure 2 représente un diagramme de flux des différentes étapes conduisant à la détermination et à l'allocation de la taille de la zone mémoire globale comprenant l'ensemble des zones mémoires élémentaires ZA.

L'étape sa comprend la réception de l'architecture du réseau de neurones RN par l'entrée RN pour être stockée dans la mémoire non-volatile MNV.

Les moyens de commande MC sont configurés pour extraire ladite architecture, c'est-à-dire la configuration des couches, des opérations entre les couches et des poids du réseau de neurone RN.

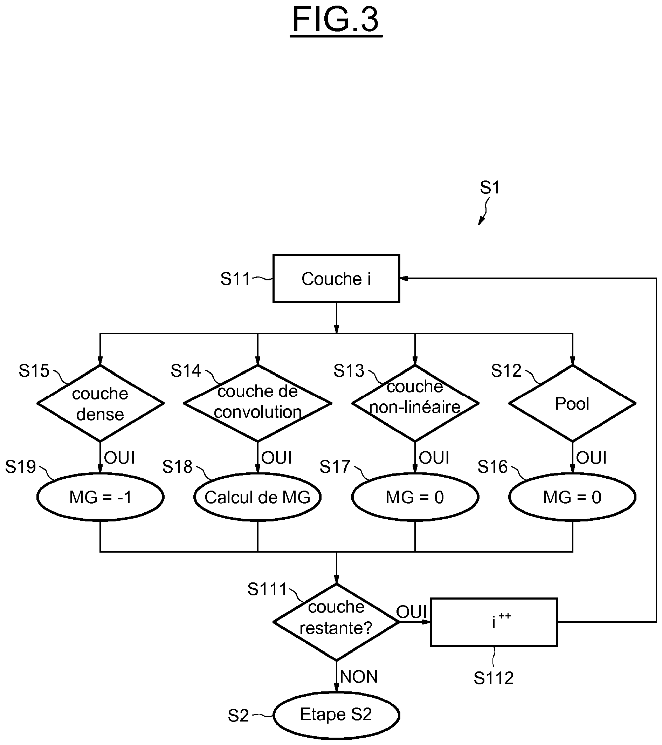

Les moyens de commande MC sont ensuite configurés pour envoyer la configuration de chaque couche à l'unité de calcul UC configurée pour calculer une valeur MG associée au type de ladite couche et/ou à l'opération réalisée entre deux couches dans l'étape S1. Le calcul sera détaillé dans la figure 3.

La valeur MG permet de déterminer les placements possibles des données d'entrée M1 et des données de sortie M2 de la couche.

Les moyens de commande MC choisissent ensuite dans l'étape S2 le placement requérant le moins d'espace mémoire et mettent à jour une valeur courante de taille mémoire si ladite valeur courante est supérieure à la taille mémoire élémentaire d'une zone mémoire élémentaire ZA antérieure.

Les moyens de commande MC mettent également à jour, dans l'étape S2 l'adresse relative de la zone mémoire élémentaire ZA associée à ladite couche.

L'étape S1 est répétée pour toutes les couches du réseau de neurones RN.

L'étape S2 est répétée également pour toutes les couches du réseau de neurones RN une fois l'étape S1 terminée.

La valeur courante finale représente la taille mémoire globale de la zone mémoire globale à allouer.

Dans l'étape S3, les moyens de commande MC autorisent les moyens d'allocation MA à allouer ladite zone mémoire globale ayant une taille égale à la valeur courante finale.

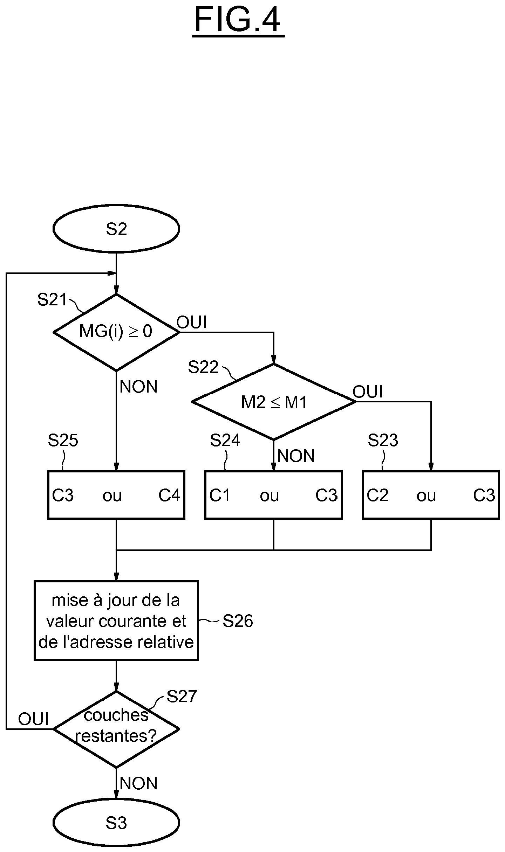

Une fois le bloc de la zone mémoire globale alloué, l'unité de calcul UC est configurée pour calculer les adresses absolues de chaque zone mémoire élémentaire ZA. Ledit calcul est détaillé dans la figure 4.

La figure 3 illustre un diagramme de flux détaillé de l'étape S1.

Dans l'étape S11, la configuration de chaque couche i du réseau de neurones RN est envoyée à l'unité de calcul UC.

Si ladite couche i est une couche dense (S15), la valeur MG sera égale à -1 dans S19.

Si la couche i est une couche de convolution (S14), la valeur MG est calculée. Elle peut être négative, positive ou égale à 0 dans S16. La valeur MG est par exemple calculée selon la formule ci-dessous :

$$MG = (CEIL(CONV1\_PADX+1, CONV1\_STRIDEX) + CONV1\_OUT\_DIM\_X \times CEIL(CONV1\_PADY+1, CONV1\_STRIDEY)) \times CONV1\_OUT\_CH),$$

dans laquelle:

CEIL est une fonction qui permet d'arrondir un nombre jusqu'au nombre entier supérieur.

CONV1_PADX+1 est une variable qui représente le nombre de zéros ajoutés horizontalement en partant de la gauche.

CONV1_STRIDEX est une variable qui représente le pas de déplacement horizontal du noyau de convolution.

CONV1_OUT_DIM_X est une variable qui représente la taille des données de sortie.

CONV1_PADY+1 représente le nombre de zéros ajoutés verticalement en partant du haut.

CONV1_STRIDEY représente le pas de déplacement vertical du noyau de convolution.

CONV1_OUT_CH représente le nombre de canaux de sortie.

Si la couche i est une couche non-linéaire (S13), la valeur MG est égale à 0 dans S17 et si la couche est une couche de mise en commun (S12), la valeur MG est également égale à 0 dans S16.

La couche i peut également être une couche « Soft Max » connue de l'homme du métier. Dans ce cas, la valeur MG est également égale à 0. Les moyens de commande MC vérifient lors de l'étape 5111, s'il y a encore des couches du réseau de neurones RN à traiter. Si oui, les moyens de commande MC autorisent, dans l'étape 5112, l'unité de calcul UC à extraire la configuration d'une des couches restantes. Si non, on passe à l'étape S2.

Si l'opération effectuée entre deux couches successives est reconnue par l'unité de calcul UC, l'unité de calcul UC calcule la valeur MG.

Par exemple si l'opération est une conversion virgule flottante à virgule fixe, la valeur MG est égale à 0 et si l'opération est une conversion virgule fixe à virgule flottante, la valeur MG est égale à trois fois la taille mémoire des données d'entrée en virgule fixe.

L'homme du métier saura déterminer MG pour d'éventuels autres types d'opérations considérées comme reconnues par l'unité de calcul.

Si l'opération est considérée comme non reconnue par l'unité de calcul, la valeur de MG est égale à -1.

La figure 4 illustre un diagramme de flux détaillé de l'étape S2.

Pour chaque couche i, si la valeur calculée MG est inférieure à 0 (S21), les moyens de commande MC déterminent deux placements possibles C3 et C4 à l'étape S24 des données d'entrée M1 et des données de sortie M2.

Dans le cas où la valeur de MG est supérieure ou égale à 0, les moyens de commande MC comparent la taille des données d'entrée M1 à la taille des données de sortie M2 dans l'étape S22.

Si la taille des données de sortie M2 est inférieure ou égale à la taille des données d'entrée M1, les moyens de commande MC déterminent deux placements possibles C2 et C3 à l'étape S23, des données d'entrée M1 et des données de sortie M2.

Si la taille des données de sortie M2 est supérieure à la taille des données d'entrée M1, les moyens de commande MC déterminent deux placements possibles C1 et C3 à l'étape 524, des données d'entrée M1 et des données de sortie M2.

Les moyens de commande MC choisissent ensuite en fonction des placements possibles, le placement requérant le moins d'espace mémoire.

Ils procèdent ensuite dans l'étape S26 à la mise à jour de la valeur courante correspondant à la taille mémoire élémentaire de la zone mémoire élémentaire ZA ou à la somme de la taille mémoire élémentaire et de la taille mémoire additionnelle de la zone mémoire élémentaire ZA si la valeur courante est supérieure à une valeur courante associée à la couche précédente.

Les moyens de commande MC définissent également l'adresse relative de la zone mémoire élémentaire ZA.

A l'étape 527, les moyens de commande MC vérifient s'il y a encore des couches restantes à traiter. Si oui, les moyens de commande MC traitent la couche suivante et si non, on passe à l'étape S3 où les moyens de commande MC donnent l'autorisation aux moyens d'allocation MA d'allouer ladite zone mémoire globale d'une taille égale à la dernière valeur courante mise à jour.

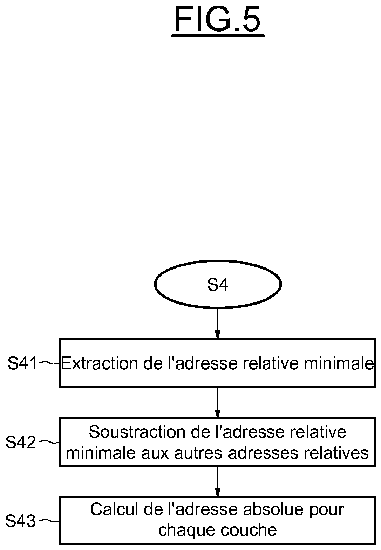

La figure 5 illustre un diagramme de flux détaillant l'étape S4 comprenant le calcul des adresses absolues de chaque zone mémoire élémentaire ZA.

Pour cela, les moyens de commande MC déterminent l'adresse relative minimale entre les adresses relatives de toutes les zones mémoires élémentaires ZA dans l'étape S41 puis soustraient ladite valeur minimale aux autres adresses relatives des autres zones mémoires élémentaires ZA dans l'étape S42 pour générer des adresses relatives positives.

L'unité de calcul UC génère ensuite dans l'étape S43, pour chaque couche, une adresse absolue en prenant en compte l'adresse relative positive et l'adresse absolue de la zone mémoire globale.

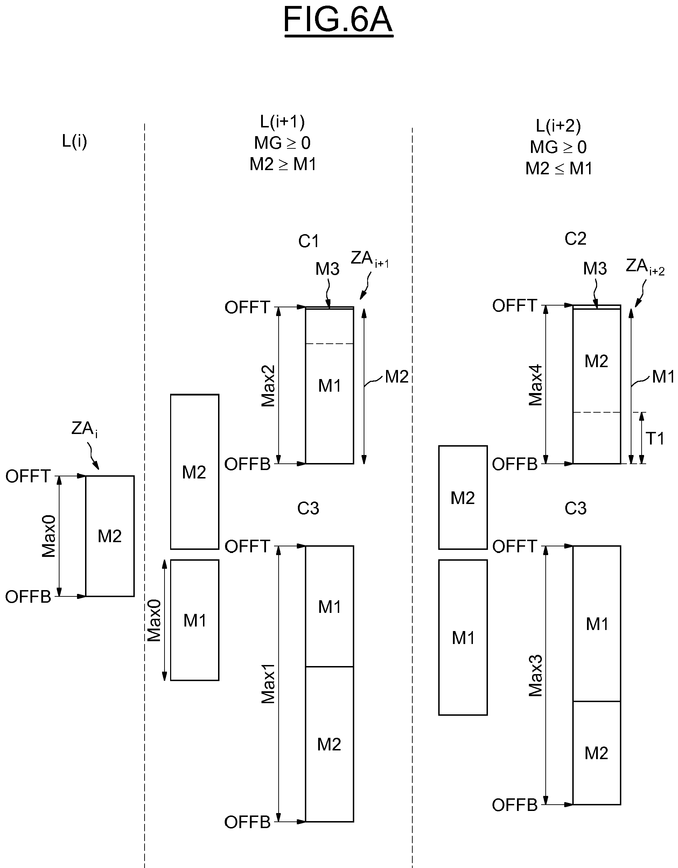

La figure 6A illustre les étapes S2 et S3 pour la première couche L(i), la deuxième couche L(i+1) et la troisième couche L(i+2) du réseau de neurones RN.

La première couche L(i) du réseau de neurones RN est associée à une première zone mémoire élémentaire $ZA_i$ ayant une taille mémoire élémentaire Max0 et une adresse relative représentée par deux pointeurs OFFB et OFFT délimitant ladite zone mémoire élémentaire $ZA_i$.

Ladite zone mémoire élémentaire $ZA_i$ comprend les données de sortie M2.

Les données de sortie M2 de la couche L(i) représentent les données d'entrée M1 de la deuxième couche L(i+1). Les données M2 de la couche L(i+1) représentent les données de sortie de la couche L(i+1).

La deuxième couche L(i+1) est par exemple une couche de convolution. Sa valeur calculée MG est ici supérieure à 0. On peut par exemple avoir une opération à réaliser entre deux couches successives par exemple L(i) et L(i+1). Dans ce cas, la valeur MG est calculée suivant la nature de l'opération comme expliqué ci-avant.

Etant donné que la taille des données de sortie M2 de la couche L(i+1) est supérieure à la taille des données d'entrée M1 de la couche L(i+1), les deux placements possibles des données d'entrée M1 et des données de sortie M2 sont C1 et C3.

Dans le placement C1, les données de sortie M2 de la couche L(i+1) se superposent aux données d'entrée M1 de la couche L(i+1). En particulier, les données d'entrée M1 de la couche L(i+1) sont écrasées par les données de sortie M2 de la couche L(i+1) une fois ces dernières calculées. En particulier, les données d'entrée M1 de la couche L(i+1) peuvent être écrasées du fait qu'elles ne sont pas réutilisées par les couches suivantes du réseau de neurones RN. Une zone mémoire additionnelle présentant une taille mémoire M3 est également prévue pour éviter un écrasement de données utiles dans la zone mémoire élémentaire de la couche L(i+1). La valeur MG calculée représente la taille mémoire additionnelle M3.

Dans le placement C3, les données d'entrée M1 de la couche L(i+1) et les données de sortie M2 de la couche L(i+1) sont conservées.

Dans cet exemple, la taille Max2 du placement C1 est inférieure à la taille Max1 du placement C3. Les moyens de commande MC choisissent donc le placement C1 dans lequel une partie des données de sortie M2 sont stockées à la place d'une partie des données d'entrée M1. Néanmoins, dans d'autres exemples, on pourrait avoir une taille mémoire additionnelle M3 supérieure à la taille mémoire des données d'entrée M1. Le placement C3 serait alors choisi.

Dans l'exemple représenté, les données d'entrée M1 et les données de sortie M2 de la couche L(i+1) ainsi placées occupent la zone mémoire élémentaire ZAi+i dont la taille mémoire élémentaire est égale à la somme de la taille mémoire des données de sortie M2. La taille de la zone mémoire élémentaire ZAi+i est ainsi égale à la somme de la taille mémoire élémentaire et de la taille mémoire additionnelle. Dans ce cas, la taille de la zone mémoire élémentaire ZAi+i est bien inférieure ou égale à la somme de la taille des données d'entrée M1 et des données de sortie M2 de la couche L(i+1).

Les moyens de commande MC mettent à jour l'adresse relative OFFB, OFFT de ladite zone mémoire élémentaire ZAi+i et la valeur courante de taille mémoire qui a dorénavant pour valeur Max2 car la valeur Max2 est supérieure à la valeur Max0.

La troisième couche L(i+2) est par exemple une couche de convolution. Dans ce cas, la valeur calculée MG par l'unité de calcul UC est supérieure à 0.

Les données de sortie M2 de la couche L(i+1) représentent les données d'entrée M1 de la deuxième couche L(i+2). Les données M2 de la couche L(i+2) représentent les données de sortie de la couche L(i+2).

Etant donné que la taille des données de sortie M2 est inférieure à la taille Max2 des données d'entrée M1, les deux placements possibles des données d'entrée M1 et des données de sortie M2 sont C2 et C3.

Dans le placement C2, les données de sortie M2 de la couche L(i+2) se superposent sur une partie des données d'entrée M1 de la couche L(i+2). En particulier, une partie des données d'entrée M1 de la couche L(i+2) sont écrasées par les données de sortie M2 de la couche L(i+2) une fois ces dernières calculées. Une zone mémoire additionnelle présentant une taille mémoire M3 est également prévue pour éviter un écrasement de données utiles dans la zone mémoire élémentaire de la couche L(i+1). La valeur MG calculée représente une taille mémoire additionnelle M3.

Dans le placement C3, les données d'entrée M1 de la couche L(i+2) et les données de sortie M2 de la couche L(i+2) sont conservées.

Dans cet exemple, la taille Max4 du placement C2 est inférieure à la taille Max3 du placement C3. Les moyens de commande MC choisissent donc le placement C2 dans lequel une partie des données de sortie M2 sont stockées à la place d'une partie des données d'entrée M1. Néanmoins, dans d'autres exemples, on pourrait avoir une taille mémoire additionnelle M3 supérieure à la taille mémoire des données de sortie M2. Le placement C3 serait alors choisi.

Dans l'exemple représenté, les données d'entrée M1 et les données de sortie M2 ainsi placées occupent la zone mémoire élémentaire $ZA_{i+2}$ dont la taille mémoire élémentaire est égale à la taille mémoire des données de sortie M1. La taille de la zone mémoire élémentaire $ZA_{i+2}$ est ainsi égale à la somme de la taille mémoire élémentaire et de la taille mémoire additionnelle.

Les moyens de commande MC mettent à jour l'adresse relative OFFB, OFFT de ladite zone mémoire élémentaire $ZA_{i+2}$ et la valeur courante de taille mémoire qui a dorénavant pour valeur Max4.

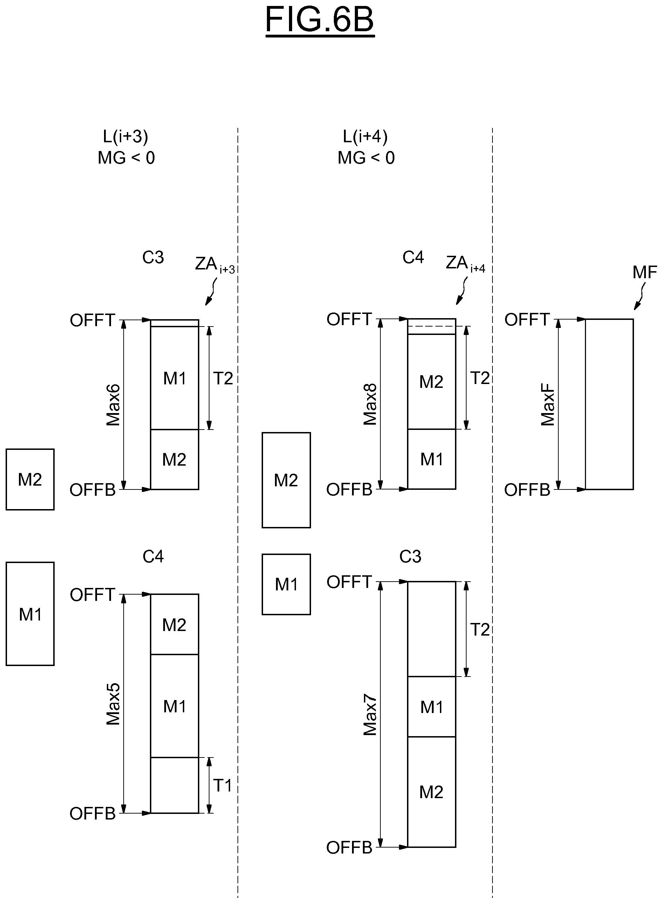

La figure 6B illustre les étapes S2 et S3 pour la quatrième couche L(i+3) et la dernière couche L(i+4) du réseau de neurones RN.

La quatrième couche L(i+3) est par exemple une couche de dense. Sa valeur calculée MG est donc égale à -1.

Les données de sortie M2 de la couche L(i+2) représentent les données d'entrée M1 de la deuxième couche L(i+3). Les données M2 de la couche L(i+3) représentent les données de sortie de la couche L(i+3).

Comme MG est égale à -1, il n'est pas possible de superposer les données de sortie M2 de la couche L(i+3) sur les données d'entrée M1 de la couche L(i+3).

Les deux placements possibles des données d'entrée M1 et des données de sortie M2 sont C3 et C4.

Dans le placement C3, les données de sortie M2 de la couche L(i+3) se superposent sur une partie T1 de la zone mémoire élémentaire de la couche L(i+2) ne comprenant pas les données de sortie M2 de la couche L(i+2) (c'est-à-dire les données d'entrée M1 de la couche L(i+3). En particulier, cette partie T1 de la zone mémoire élémentaire de la couche L(i+2) est écrasée par les données de sortie M2 de la couche L(i+3) une fois ces dernières calculées.

Dans le placement C4, les données d'entrée M1 de la couche L(i+3), les données de sortie M2 de la couche L(i+3) et la partie T1 de la zone mémoire élémentaire de la couche L(i+2) sont conservées.

Dans cet exemple, la taille Max6 du placement C3, dans lequel les données d'entrée M1 et les données de sortie M2 sont juxtaposées, est inférieure à la taille Max5 du placement C4.

Les moyens de commande MC choisissent donc le placement C3.

Les données d'entrée M1 et les données de sortie M2 ainsi placées occupent la zone mémoire élémentaire $ZA_{i+3}$ dont la taille mémoire élémentaire est égale à la somme de la taille mémoire des données de sortie M2 et de la taille mémoire des données d'entrée M1.

Les moyens de commande MC mettent à jour l'adresse relative OFFB, OFFT de ladite zone mémoire élémentaire $ZA_{i+3}$ et la valeur courante de taille mémoire qui a dorénavant pour valeur Max6.

La dernière couche L(i+4) est par exemple une couche dense. Sa valeur calculée MG est donc égale à -1.

Les données de sortie M2 de la couche L(i+3) représentent les données d'entrée M1 de la deuxième couche L(i+4). Les données M2 de la couche L(i+4) représentent les données de sortie de la couche L(i+4).

Comme MG est égale à -1, il n'est pas possible de superposer les données de sortie M2 de la couche L(i+4) sur les données d'entrée M1 de la couche L(i+4).

Les deux placements possibles des données d'entrée M1 et des données de sortie M2 sont C3 et C4.

Dans le placement C4, les données de sortie M2 de la couche L(i+4) se superposent sur une partie T2 de la zone mémoire élémentaire de la couche L(i+3) comprenant les données d'entrée M1 de la couche L(i+3). En particulier, cette partie T2 de la zone mémoire élémentaire de la couche L(i+3) est au moins en partie écrasée par les données de sortie M2 de la couche L(i+4) une fois ces dernières calculées.

Dans le placement C3, les données d'entrée M1 de la couche L(i+4), les données de sortie M2 de la couche L(i+4) et la partie T2 de la zone mémoire élémentaire de la couche L(i+3) sont conservées.

Dans cet exemple, la taille Max8 du placement C4, dans lequel les données d'entrée M1 et les données de sortie M2 sont juxtaposées, est inférieure à la taille Max7 du placement C3.

Les moyens de commande MC choisissent donc le placement C4.

Les données d'entrée M1 et les données de sortie M2 ainsi placées occupent la zone mémoire élémentaire $ZA_{i+4}$ dont la taille mémoire élémentaire est égale à la somme de la taille mémoire des données de sortie M2 et de la taille mémoire des données d'entrée M1.

Les moyens de commande MC mettent à jour l'adresse relative OFFB, OFFT de ladite zone mémoire élémentaire $ZA_{i+4}$ et la valeur courante de taille mémoire qui a pour valeur Max8.

Les moyens de commande MC autorisent ensuite les moyens d'allocation MA à allouer une zone mémoire globale MF de taille Max8.

## Revendications

**1.** Procédé de détermination de la taille mémoire globale (MaxF) d'une zone mémoire globale (MF) à allouer dans une mémoire (MV) destinée à stocker des données d'entrée (M1) et des données de sortie (M2) de chaque couche (L) d'un réseau de neurones (RN), le procédé comprenant pour chaque couche (L) une détermination d'une taille mémoire élémentaire d'une zone mémoire élémentaire (ZA) destinée à stocker des données d'entrée (M1) et des données de sortie (M2) de ladite couche (L), **caractérisé en ce que** ladite taille élémentaire étant comprise entre la taille mémoire des données d'entrée (M1) ou de sortie (M2) de ladite couche (L) et une taille égale à la somme de la taille mémoire des données d'entrée (M1) et de la taille mémoire des données de sortie (M2) de ladite couche (L), la détermination de ladite taille mémoire élémentaire et le placement des données d'entrée (M1) et des données de sortie (M2) dépendant au moins du type de la couche (L), de sorte que :

- pour au moins un type de couche (L), une partie au moins des données de sortie (M2) sont stockées dans la zone mémoire élémentaire (ZA) à la place d'une partie au moins des données d'entrée (M1), la zone mémoire élémentaire comportant une zone mémoire additionnelle permettant d'éviter un écrasement de données utiles dans la zone mémoire élémentaire,
- pour au moins un autre type de couche (L), les données de sortie (M2) et les données d'entrée (M1) sont juxtaposées dans la zone mémoire correspondante,

la taille mémoire globale (MaxF) étant déterminée à partir des tailles mémoires élémentaires (ZA) associées auxdites couches (L), la zone mémoire globale (MF) contenant toutes les zones mémoire élémentaires (Z A).

2. Procédé selon la revendication 1, dans lequel la détermination de la taille mémoire globale (MaxF) comprend des mises à jour successives d'une valeur courante (Maxi) de taille mémoire à partir des tailles mémoire élémentaires successivement déterminées pour les couches successives (L) du réseau de neurones, la valeur de la taille mémoire globale (MaxF) étant la dernière valeur courante mise à jour à l'issue de toutes les mises à jour successives.

3. Procédé selon la revendication 2, dans lequel la première valeur (MaxO) de taille mémoire est la taille mémoire élémentaire de la zone mémoire élémentaire (ZA) associée à la première couche, et pour chaque couche courante, la valeur courante (Maxi) de taille mémoire mise à jour est la taille mémoire élémentaire de la zone mémoire élémentaire (ZA) associée à ladite couche courante si cette taille mémoire élémentaire est supérieure à la valeur précédente de la taille mémoire, ou reste ladite valeur précédente de la taille mémoire si cette taille mémoire élémentaire est inférieure ou égale à cette valeur précédente de la taille mémoire.

4. Procédé selon l'une quelconque des revendications 2 ou 3, comprenant en outre pour chaque couche (L), une mise à jour de l'adresse relative (OFFB, OFFT) de la zone mémoire élémentaire (ZA) associée à ladite couche.

5. Procédé selon l'une des revendications 2 à 4, comprenant pour chaque couche (L), une détermination de l'adresse absolue de ladite zone mémoire élémentaire (ZA) associée à ladite couche (L).

6. Dispositif (DIS), comprenant une entrée (EN) destinée à recevoir des paramètres définissant les différentes couches successives (L) d'un réseau de neurones (RN), et des moyens de traitement (OP), couplés à ladite entrée (EN), et destinés à déterminer la taille mémoire globale (MaxF) d'une zone mémoire globale (MF) à allouer dans une mémoire (MV) destinée à stocker des données d'entrée (M1) et des données de sortie (M2) de chaque couche (L) du réseau de neurones, les moyens de traitement (OP) étant configurés pour déterminer, pour chaque couche (L), une taille mémoire élémentaire d'une zone mémoire élémentaire (ZA) destinée à stocker des données d'entrée (M1) et des données de sortie (M2) de ladite couche (L), **caractérisé en ce que** ladite taille élémentaire étant comprise entre la taille mémoire des données d'entrée (M1) ou de sortie (M2) de ladite couche (L) et une taille égale à la somme de la taille mémoire des données d'entrée (M1) et de la taille mémoire des données de sortie (M2) de ladite couche (L), les moyens de traitement (OP) sont configurés pour déterminer ladite taille mémoire élémentaire et le placement des données d'entrée (M1) et des données de sortie (M2) en fonction au moins du type de la couche (L) de sorte que :

- pour au moins un type de couche (L), une partie au moins des données de sortie (M2) sont destinées à être stockées dans la zone mémoire élémentaire (ZA) à la place d'une partie au moins des données d'entrée (M1), la zone mémoire élémentaire pouvant comporter une zone mémoire additionnelle permettant d'éviter un écrasement de données utiles dans la zone mémoire élémentaire
- pour au moins un autre type de couche (L), les données de sortie (M2) et les données d'entrée (M1) sont destinées à être juxtaposées dans la zone mémoire élémentaire correspondante (ZA),

la taille mémoire globale (Max9) étant déterminée à partir des tailles mémoires élémentaires associées auxdites couches (L), la zone mémoire globale (MF) étant configurée pour contenir toutes les zones mémoire élémentaires (ZA).

**7.** Dispositif (DIS) selon la revendication 6, dans lequel les moyens de traitement (OP) sont configurés pour déterminer de ladite taille mémoire globale (MaxF) par des mises à jour successives d'une valeur courante (Maxi) de taille mémoire à partir des tailles mémoire élémentaires successivement déterminées par les couches successives (L) du réseau de neurones, la valeur de la taille mémoire globale (MaxF) étant la dernière valeur courante mise à jour à l'issue de toutes les mises à jour successives.

**8.** Dispositif (DIS) selon la revendication 7, dans lequel la première valeur (MaxO) de taille mémoire est la taille mémoire élémentaire de la zone mémoire élémentaire (ZA) associée à la première couche, et pour chaque couche courante, les moyens de traitement (OP) sont configurés pour mettre à jour la valeur courante (Maxi) de taille mémoire avec la taille mémoire élémentaire de la zone mémoire élémentaire (ZA) associée à ladite couche courante (L) si cette taille mémoire élémentaire est supérieure à la valeur précédente de la taille mémoire, ou avec ladite valeur précédente de la taille mémoire si cette taille mémoire élémentaire est inférieure ou égale à cette valeur précédente de la taille mémoire.

**9.** Dispositif selon l'une quelconque des revendications 7 ou 8, dans lequel les moyens de traitement (OP) sont configurés pour effectuer en outre pour chaque couche (Li), une mise à jour de l'adresse relative (OFFB, OFFT) de la zone mémoire élémentaire (ZA) associée à ladite couche.

**10.** Dispositif selon l'une des revendications 7 à 9, dans lequel les moyens de traitement (OP) sont configurés pour effectuer en outre pour chaque couche (L), une détermination de l'adresse absolue de ladite zone mémoire élémentaire (ZA) associée à ladite couche (L).

**11.** Microcontrôleur, comportant un dispositif (DIS) selon l'une des revendications 6 à 10.


**Patentansprüche**

**1.** Verfahren zum Bestimmen der allgemeinen Speichergröße (MaxF) eines allgemeinen Speicherbereichs (MF), der in einem Speicher (MV) zugewiesen werden soll, welcher dafür vorgesehen ist, Eingangsdaten (M1) und Ausgangsdaten (M2) jeder Schicht (L) eines neuronalen Netzes (RN) zu speichern, wobei das Verfahren für jede Schicht (L) ein Bestimmen einer Elementarspeichergröße eines Elementarspeicherbereichs (ZA) umfasst, der dafür vorgesehen ist, Eingangsdaten (M1) und Ausgangsdaten (M2) der Schicht (L) zu speichern, **dadurch gekennzeichnet, dass** die Elementargröße zwischen der Speichergröße der Eingangs- (M1) oder Ausgangsdaten (M2) der Schicht (L) und einer Größe liegt, die gleich der Summe der Speichergröße der Eingangsdaten (M1) und der Speichergröße der Ausgabedaten (M2) der Schicht (L) ist, wobei das Bestimmen der Elementarspeichergröße und das Anordnen der Eingangsdaten (M1) und der Ausgangsdaten (M2) mindestens vom Typ der Schicht (L) abhängen, so dass:

- für mindestens einen Typ der Schicht (L) mindestens ein Teil der Ausgangsdaten (M2) in dem Elementarspeicherbereich (ZA) anstelle mindestens eines Teils der Eingangsdaten (M1) gespeichert wird, wobei der Elementarspeicherbereich einen zusätzlichen Speicherbereich umfasst, der das Verhindern eines Überschreibens von Nutzdaten in dem Elementarspeicherbereich ermöglicht,
- für mindestens einen anderen Typ der Schicht (L) die Ausgangsdaten (M2) und die Eingangsdaten (M1) im entsprechenden Speicherbereich nebeneinander angeordnet werden,

wobei die allgemeine Speichergröße (MaxF) aus den Elementarspeichergrößen (ZA) bestimmt wird, die den Schichten (L) zugeordnet sind, wobei der allgemeine Speicherbereich (MF) alle Elementarspeicherbereiche (ZA) enthält.

**2.** Verfahren nach Anspruch 1, bei dem das Bestimmen der allgemeinen Speichergröße (MaxF) aufeinanderfolgende Aktualisierungen eines aktuellen Werts (Maxi) der Speichergröße aus den Elementarspeichergrößen umfasst, die nacheinander für die aufeinanderfolgenden Schichten (L) des neuronalen Netzes bestimmt werden, wobei der Wert der allgemeinen Speichergröße (MaxF) der letzte aktualisierte Wert nach allen aufeinanderfolgenden Aktualisierungen ist.

**3.** Verfahren nach Anspruch 2, bei dem der erste Wert (MaxO) der Speichergröße die Elementarspeichergröße des Elementarspeicherbereichs (ZA) ist, der der ersten Schicht zugeordnet ist, und für jede aktuelle Schicht der aktuelle Wert (Maxi) der aktualisierten Speichergröße die Elementarspeichergröße des Elementarspeicherbereichs (ZA) ist, der der aktuellen Schicht zugeordnet ist, wenn diese Elementarspeichergröße größer als der vorherige Wert der Speichergröße ist, oder der vorherige Wert der Speichergröße bleibt, wenn diese Elementarspeichergröße kleiner gleich diesem vorherigen Wert der Speichergröße ist.

4. Verfahren nach einem der Ansprüche 2 oder 3, das ferner ein Aktualisieren der relativen Adresse (OFFB, OFFT) des Elementarspeicherbereichs (ZA), die der Schicht zugeordnet ist, für jede Schicht (L) umfasst.

5. Verfahren nach einem der Ansprüche 2 bis 4, das ferner ein Bestimmen der absoluten Adresse des Elementarspeicherbereichs (ZA), der der Schicht (L) zugeordnet ist, für jede Schicht (L) umfasst.

6. Vorrichtung (DIS), umfassend einen Eingang (EN), der dafür vorgesehen ist, Parameter zu empfangen, die die verschiedenen aufeinanderfolgenden Schichten (L) eines neuronalen Netzes (RN) definieren, und ein Verarbeitungsmittel (OP), das mit dem Eingang (EN) gekoppelt und dafür vorgesehen ist, die allgemeine Speichergröße (MaxF) eines allgemeinen Speicherbereichs (MF), der in einem Speicher (MV) zugewiesen werden soll, der dafür vorgesehen ist, Eingangsdaten (M1) und Ausgangsdaten (M2) jeder Schicht (L) eines neuronalen Netzes zu speichern, wobei das Verarbeitungsmittel (OP) dazu konfiguriert ist, für jede Schicht (L) eine Elementarspeichergröße eines Elementarspeicherbereichs (ZA) zu bestimmen, der dafür vorgesehen ist, Eingangsdaten (M1) und Ausgangsdaten (M2) der Schicht (L) zu speichern, **dadurch gekennzeichnet, dass** die Elementargröße zwischen der Speichergröße der Eingangs- (M1) oder Ausgangsdaten (M2) der Schicht (L) und einer Größe liegt, die gleich der Summe der Speichergröße der Eingangsdaten (M1) und der Speichergröße der Ausgabedaten (M2) der Schicht (L) ist, wobei das Verarbeitungsmittel (OP) dazu konfiguriert ist, die Elementarspeichergröße zu bestimmen und die Eingangsdaten (M1) und die Ausgangsdaten (M2) in Abhängigkeit von mindestens dem Typ der Schicht (L) anzuordnen, so dass:

   - für mindestens einen Typ der Schicht (L) mindestens ein Teil der Ausgangsdaten (M2) dafür vorgesehen ist, in dem Elementarspeicherbereich (ZA) anstelle mindestens eines Teils der Eingangsdaten (M1) gespeichert zu werden, wobei der Elementarspeicherbereich einen zusätzlichen Speicherbereich umfassen kann, der das Verhindern eines Überschreibens von Nutzdaten in dem Elementarspeicherbereich ermöglicht,
   - für mindestens einen anderen Typ der Schicht (L) die Ausgangsdaten (M2) und die Eingangsdaten (M1) dafür vorgesehen sind, im entsprechenden Speicherbereich (ZA) nebeneinander angeordnet zu werden,

   wobei die allgemeine Speichergröße (Max9) aus den Elementarspeichergrößen bestimmt wird, die den Schichten (L) zugeordnet sind, wobei der allgemeine Speicherbereich (MF) dazu konfiguriert ist, alle Elementarspeicherbereiche (ZA) zu enthalten.

7. Vorrichtung (DIS) nach Anspruch 6, bei der das Verarbeitungsmittel (OP) dazu konfiguriert ist, die allgemeine Speichergröße (MaxF) durch aufeinanderfolgende Aktualisierungen eines aktuellen Werts (Maxi) der Speichergröße aus den Elementarspeichergrößen zu bestimmen, die nacheinander für die aufeinanderfolgenden Schichten (L) des neuronalen Netzes bestimmt werden, wobei der Wert der allgemeinen Speichergröße (MaxF) der letzte aktualisierte Wert nach allen aufeinanderfolgenden Aktualisierungen ist.

8. Vorrichtung (DIS) nach Anspruch 7, bei der der erste Wert (MaxO) der Speichergröße die Elementarspeichergröße des Elementarspeicherbereichs (ZA) ist, der der ersten Schicht zugeordnet ist, und das Verarbeitungsmittel (OP) dazu konfiguriert ist, den aktuellen Wert (Maxi) der Speichergröße mit der Elementarspeichergröße des Elementarspeicherbereichs (ZA), der der aktuellen Schicht (L) zugeordnet ist, wenn diese Elementarspeichergröße größer als der vorherige Wert der Speichergröße ist, oder mit dem vorherigen Wert der Speichergröße, wenn diese Elementarspeichergröße kleiner gleich diesem vorherigen Wert der Speichergröße ist, für jede aktuelle Schicht zu aktualisieren.

9. Vorrichtung nach einem der Ansprüche 7 oder 8, bei der das Verarbeitungsmittel (OP) dazu konfiguriert ist, ein Aktualisieren der relativen Adresse (OFFB, OFFT) des Elementarspeicherbereichs (ZA), die der Schicht zugeordnet ist, zusätzlich für jede Schicht (Li) durchzuführen.

10. Vorrichtung nach einem der Ansprüche 7 bis 9, bei der das Verarbeitungsmittel (OP) dazu konfiguriert ist, ein Bestimmen der absoluten Adresse des Elementarspeicherbereichs (ZA), die der Schicht (L) zugeordnet ist, zusätzlich für jede Schicht (L) durchzuführen.

11. Mikrosteuereinheit, die eine Vorrichtung (DIS) nach einem der Ansprüche 6 bis 10 umfasst.

**Claims**

1. A method for determining the overall memory size (MaxF) of an overall memory area (MF) to be allocated in a memory (MV) intended to store input data (M1) and output data (M2) of each layer (L) of a neural network (RN), the method comprising, for each layer (L), a determination of an elementary memory size of an elementary memory area (ZA) intended to store input data (M1) and output data (M2) of said layer (L), **characterised in that** said elementary size being comprised between the memory size of the input (M1) or output (M2) data of said layer (L) and a size equal to the sum of the memory size of the input data (M1) and the memory size of the output data (M2) of said layer (L), the determination of said elementary memory size and the placement of the input data (M1) and the output data (M2) depending at least on the type of the layer (L), such that

   - for at least one type of layer (L), at least one portion of the output data (M2) is stored in the elementary memory area (ZA) in place of at least one portion of the input data (M1), the elementary memory area including an additional memory area allowing avoiding overwriting useful data in the elementary memory area,
   - for at least one other type of layer (L), the output data (M2) and the input data (M1) are juxtaposed in the corresponding memory area,

   the overall memory size (MaxF) being determined from the elementary memory sizes (ZA) associated with said layers (L), the overall memory area (MF) containing all elementary memory areas (ZA).

2. The method according to claim 1, wherein the determination of the overall memory size (MaxF) comprises successive updates of a current value (Maxi) of memory size from the elementary memory sizes successively determined for the successive layers (L) of the neural network, the value of the overall memory size (MaxF) being the last current value updated at the end of all successive updates.

3. The method according to claim 2, wherein the first value (MaxO) of memory size is the elementary memory size of the elementary memory area (ZA) associated with the first layer, and for each current layer, the current value (Maxi) of updated memory size is the elementary memory size of the elementary memory area (ZA) associated with said current layer if this elementary memory size is greater than the previous value of the memory size, or remains said previous value of the memory size if this elementary memory size is less than or equal to this previous value of the memory size.

4. The method according to any one of claims 2 or 3, further comprising for each layer (L), an update of the relative address (OFFB, OFFT) of the elementary memory area (ZA) associated with said layer.

5. The method according to one of claims 2 to 4, comprising, for each layer (L), a determination of the absolute address of said elementary memory area (ZA) associated with said layer (L).

6. A device (DIS), comprising an input (EN) intended to receive parameters defining the different successive layers (L) of a neural network (RN), and processing means (OP), coupled to said input (EN), and intended to determine the overall memory size (MaxF) of an overall memory area (MF) to be allocated in a memory (MV) intended to store input data (M1) and output data (M2) of each layer (L) of the neural network, the processing means (OP) being configured to determine, for each layer (L), an elementary memory size of an elementary memory area (ZA) intended to store input data (M1) and output data (M2) of said layer (L), **characterised in that** said elementary size being comprised between the memory size of the input (M1) or output (M2) data of said layer (L) and a size equal to the sum of the memory size of the input data (M1) and the memory size of the output data (M2) of said layer (L), the processing means (OP) are configured to determine said elementary memory size and the placement of the input data (M1) and the output data (M2) depending on at least the type of the layer (L) such that:

   - for at least one type of layer (L), at least one portion of the output data (M2) is intended to be stored in the elementary memory area (ZA) in place of at least one portion of the input data (MD), the elementary memory area which may include an additional memory area allowing avoiding overwriting useful data in the elementary memory area
   - for at least one other type of layer (L), the output data (M2) and the input data (M1) are intended to be juxtaposed in the corresponding elementary memory area (ZA),

   the overall memory size (Max9) being determined from the elementary memory sizes associated with said layers (L), the overall memory area (MF) being configured to contain all elementary memory areas (ZA).

7. A device (DIS) according to claim 6, wherein the processing means (OP) are configured to determine said overall memory size (MaxF) by successive updates of a current value (Maxi) of memory size from the elementary memory sizes which are successively determined by the successive layers (L) of the neural network, the value of the overall memory size (MaxF) being the last current value updated at the end of all successive updates.

8. The device (DIS) according to claim 7, wherein the first value (MaxO) of memory size is the elementary memory size of the elementary memory area (ZA) associated with the first layer, and for each current layer, the processing means (OP) are configured to update the current value (Maxi) of memory size with the elementary memory size of the elementary memory area (ZA) associated with said current layer (L) if this elementary memory size is greater than the previous value of the memory size, or with said previous value of the memory size if this elementary memory size is less than or equal to this previous value of the memory size.

9. The device according to any one of claims 7 or 8, wherein the processing means (OP) are configured to further perform, for each layer (Li), an update of the relative address (OFFB, OFFT) of the elementary memory area (ZA) associated with said layer.

10. The device according to one of claims 7 to 9, wherein the processing means (OP) are configured to further perform, for each layer (L), a determination of the absolute address of said elementary memory area (ZA) associated with said layer (L).

11. A microcontroller, including a device (DIS) according to one of claims 6 to 10.

# FIG.1

# FIG.2

S0 — Réseau de neurones RN

S1 — Calcul de la valeur MG

S2 — Mise à jour de la valeur courante et de l'adresse relative

S3 — Allocation mémoire

S4 — Calcul de la valeur absolue pour chaque zone mémoire élémentaire ZA

# FIG.3

S1

S11 — Couche i

S15 — couche dense

S14 — couche de convolution

S13 — couche non-linéaire

S12 — Pool

S19 — MG = -1    OUI

S18 — Calcul de MG    OUI

S17 — MG = 0    OUI

S16 — MG = 0    OUI

S111 — couche restante?    OUI

$i^{++}$

S112

NON

S2 — Etape S2

# FIG.4

```
                    ┌─────────┐
                    │   S2    │
                    └────┬────┘
                         │
      ┌──────────────────┤
      │         S21 ◇    │
      │              ╱MG(i) ≥ 0╲──── OUI ────┐
      │              ╲         ╱             │
      │               ◇                      │
      │               │NON          S22 ◇   │
      │               │              ╱M2 ≤ M1╲──── OUI ────┐
      │               │              ╲      ╱              │
      │               │               ◇                   │
      │  S25          │      S24      │NON      S23        │
      │   ┌───────────┴──┐  ┌─────────┴────┐  ┌────────────┴─┐
      │   │ C3   ou   C4 │  │ C1   ou   C3 │  │ C2   ou   C3 │
      │   └───────┬──────┘  └──────┬───────┘  └──────┬───────┘
      │           │                │                 │
      │           │                └─────────────────┘
      │           │
      │   ┌───────┴──────────┐
      │   │  mise à jour de la│
      │   │  valeur courante et│─── S26
      │   │  de l'adresse relative│
      │   └───────┬──────────┘
      │           │
      │      S27  ◇
      └── OUI ──╱couches  ╲
               ╲restantes?╱
                ◇
                │NON
           ┌────┴────┐
           │   S3    │
           └─────────┘
```

# FIG.5

```
                    ┌──────────┐
                    │    S4    │
                    └──────────┘
                         │
                         ▼
  S41 ──┌─────────────────────────────────────────┐
        │ Extraction de l'adresse relative minimale │
        └─────────────────────────────────────────┘
                         │
                         ▼
  S42 ──┌─────────────────────────────────────────┐
        │    Soustraction de l'adresse relative    │
        │ minimale aux autres adresses relatives   │
        └─────────────────────────────────────────┘
                         │
                         ▼
  S43 ──┌─────────────────────────────────────────┐
        │     Calcul de l'adresse absolue pour     │
        │             chaque couche                │
        └─────────────────────────────────────────┘
```

# FIG.6A

# FIG.6B

L(i+3)
MG < 0

L(i+4)
MG < 0

C3    ZA$_{i+3}$

C4    ZA$_{i+4}$

MF

OFFT

M1    T2

Max6

M2

OFFB

M2

C4

OFFT

M1

M2

Max5

M1

T1

OFFB

OFFT

M2    T2

Max8

M1

OFFB

M2

M1

C3

OFFT

T2

Max7

M1

M2

OFFB

OFFT

MaxF

OFFB

**EP 3 663 987 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018136912 A